# EUROPÄISCHE PATENTANMELDUNG

(11) **EP 1 050 449 A1**
(43) Veröffentlichungstag der Anmeldung: **08.11.2000**
(21) Anmeldenummer: 99810376.6
(22) Anmeldetag: 04.05.1999
(51) Int. Cl.: B62D 29/00, B62D 29/04

(54) **Radsupport für Fahrzeuge**

(71) Anmelder: Alusuisse Technology & Management AG, 8212 Neuhausen am Rheinfall (CH)
(72) Erfinder: Röllin, Ulrich, 8048 Zürich (CH); Streiff, Samuel, 5210 Windisch (CH)

(57) **Zusammenfassung**

Ein Radsupport (2) enthält mindestens ein quer zur Fahrzeugachse verlaufendes Trägerprofil (3) aus verstärktem Kunststoff, vorzugsweise aus faserverstärktem Kunststoff, und eine an diesem angebrachte oder in dieses eingelassene Hülse oder Hohlkörper aus Metall (42), welche eine Antriebseinheit aufnimmt. Der Radsupport (2) bildet zusammen mit der Antriebseinheit eine komplette Baugruppe, welche physikalisch getrennt von der Karosserie hergestellt wird. Im Radsupport (2) können weitere Anbauteile aus Metall integriert sein, z.B. zur Aufnahme von Querversteifung- Torsions-, oder Diagonalelementen. Die Verbindung zwischen Anbauteilen und Radsupport (2) geschieht beispielsweise mittels Kleben oder Kunststoffschweissen. Zwei gegenüberliegende Radsupporte (2) können mit Querprofilen verbunden sein und einen Fahrschemel ausbilden.

## Beschreibung

Vorliegende Erfindung betrifft ein Radsupport zur Aufnahme von Radantriebstrukturen, für Strassen- und Schienenfahrzeuge, sowie ein Verfahren zum Herstellen eines erfindungsgemässen Radsupportes.

Ein Radsupport ist eine radnahe Trägerstruktur, welche im wesentlichen einer Radanlage zugeordnet ist. In der nachfolgenden Beschreibung wird der Einfachheit halber von Radsupport im Sinne einer radnahen Tragstruktur gesprochen.

Fahrzeugkarosserien, insbesondere PKW-Karosserien, können aufgrund ihrer Konstruktion in selbsttragende und nicht selbsttragende Karosserien unterschieden werden. Während bei nicht selbsttragenden Karosserien beispielsweise der Motor, die Radaufhängung oder die Antriebseinheit über einen torsions- und biegesteifen Rahmenträger mit der Karosserie verbunden sind, werden bei der stelbsttragenden Karosserie alle Funktionen, also auch die Aufnahmepunkte für Motor und Radaufhängung, in die Karosserie integriert.

Eine Zwischenlösung der vorgängig beschriebenen zwei Konstruktionsprinzipien ist die Bauweise mit Trägern, insbesondere Hilfsträgern, wie Achsschemel oder Fahrschemel, welche beispielsweise Aufnahmepunkte für den Motor, für Antriebsstrukturen und Radaufhängung beinhalten und selbst an der Karosserie, insbesondere am Unterbau der Karosserie, befestigt sind.

Die Krafteinspeisung von der Antriebs- oder Getriebeeinheit auf den Achsantrieb bzw. auf die Fahrzeugräder erfolgt in vielen Anwendungen, beispielsweise bei PKW's, über eine Kardanwelle, Gelenkwellen und Verteilergetriebe. Achs- oder Fahrschemel nehmen beispielsweise die Achsantriebe auf, wobei unter Achse eine vordere oder hintere Radachse zu verstehen ist. Weiters sind am Achs- oder Fahrschemel häufig auch Feder- und Torsionselemente, wie Torsionsstäbe, Lenker sowie weitere Anbauteile angebaut oder angeflanscht.

Das Differentialgetriebe-Bauteil aus Stahl, Aluminium oder einer metallischen Legierung ist im weiteren vielfach an der Getriebeeinheit angeflanscht oder als Achseinheit mit dem Fahrzeugchassis bzw. der Fahrzeugstruktur verbunden.

Bei Fahrzeugen die eine zentrale Antriebseinheit aufweisen wird wegen des Einsatzes von Kardanwellen, Gelenkwellen, Verteiler- oder Zwischengetrieben im Fahrzeugunterbau jeweils viel Platz benötigt, weswegen das Fahrzeuggewicht entsprechend hoch ausfällt.

Eine weitere Möglichkeit besteht darin, die Antriebseinheit jeweils in der Nähe der anzutreibenden Räder anzuordnen, welche beispielsweise durch ein im vorderen Fahrzeugbereich untergebrachtes Aggregat mit Energie versorgt werden. Für solche Einzelradantriebe werden in der Regel Elektro-, Hydraulik- oder Gasmotoren eingesetzt. Zu dieser Antriebskategorie gehören unter anderem auch die sogenannten Radnabenantriebe.

Die tragenden Strukturen im Bereich der Achsen, beispielsweise radnahe Trägerstrukturen, wie Radsupporte, Fahr- oder Achsschemel, sind in der Regel aus Metall, insbesondere aus Stahl, gefertigt.

Herkömmliche Radsupporte, Achs- oder Fahrschemel sind in der Regel als werkstoffreine Bauteile und im wesentlichen aus metallischen Werkstoffen, wie Stahl, gefertigt. Ihre Herstellung ist verhältnismässig teuer und das Gewicht solcher Bauteile ist relativ hoch.

Um das Gewicht und somit den Energieverbrauch von Fahrzeugen zu verringern, ist man immer mehr bestrebt das Gesamtgewicht der Fahrzeuge zu senken, ohne dass jedoch beispielsweise die Qualität der tragenden oder andersweitig stark beanspruchten Fahrzeugteile beeinträchtigt wird.

Aufgabe vorliegender Erfindung ist ein Radsupport bzw. eine radnahe Tragstruktur zur Aufnahme von Antriebsstrukturen, welcher von geringem Gewicht und kostengünstig in seiner Fertigung ist und als Moduleinheit unabhängig von der Fahrzeugkarosserie hergestellt und in der Endmontage schnell und einfach an die Fahrzeugstruktur angebracht werden kann. Im weiteren soll der Radsupport eine sehr hohe Festigkeit und Steifigkeit sowie Zähigkeit aufweisen und belastbar und schlagfest sein. Der Radsupport muss im weiteren sowohl kälte- als auch wärmebeständig und dauerhaft sein und zudem gegen Schmutzwasser, insbesondere Salzwasser, Öl, Fett, Benzin und Säuren beständig sein. Der Radsupport soll zudem Anbauteile enthalten und an den Fügestellen gegen mechanische oder chemische Beanspruchungen beständig sein.

Die Aufgabe wird dadurch gelöst, dass der Radsupport ein quer zur Radachse R verlaufendes Trägerprofil, teilweise oder vollständig aus Kunststoff, mit einem am Trägerprofil angebrachten oder in dieses eingelassenen Hohlkörper oder Hülse enthält, und der Radsupport Radantriebsstrukturen aufnimmt, und die den Radsupport und Radantriebsstrukturen enthaltende Baugruppe eine separate Moduleinheit ist, welche über Anbauteile an der Fahrzeugstruktur befestigt ist.

Durch das Verbinden zweier gegenüberliegender Radsupporte mit Querelementen bzw. Querprofil oder Querprofilen erhält man eine weitere bevorzugte Ausführungsvariante, den sogenannten Fahrschemel, auch Achsschemel oder Hilfsrahmen genannt.

Im folgenden wird der Einfachheit halber von Radsupport gesprochen, wobei dieselben Merkmale auch für aus beispielsweise zwei Radsupporten gefügte Fahrschemel gelten sollen.

Ein Radsupport ist zweckmässig jeweils innenseitig einem Rad zugeordnet und insbesondere über Antriebswellen, vorzugsweise über bewegliche Gelenkwellen, welche die Antriebskraft bzw. das Antriebsmoment auf das Rad übertragen, mit dem Rad verbunden.

Der Radsupport enthält ein im wesentlichen quer zur Drehachse des Rades, d.h. quer zur Radachse, liegendes Längs- oder Trägerprofil aus Kunststoff, zweckmässig aus verstärktem Kunststoff, vorzugsweise aus faserverstärktem Kunststoff, und ein an dieses angebrachter oder in dieses eingelassener Hohlkörper oder Hülse, vorzugsweise aus Metall oder Kunststoff, wobei die Mittelängsachse des Hohlkörpers oder Hülse zweckmässig gleich oder parallel zur Radachse liegt.

Das Trägerprofil weist zweckmässig eine zumindest teilweise offene Profilkonfiguration auf und ist vorzugsweise ein nach unten geöffnetes bzw. bodenwärtiges U-förmiges Trägerprofil. Es kann jedoch beispielsweise auch ein T- oder Winkelprofil sein. Möglich sind auch ganz oder teilweise geschlossene Profilkonfigurationen wie Einfach- oder Mehrfachhohlprofile.

Der Matrix-bildende Kunststoff des Trägerprofils kann ein thermoplastischer oder duroplastischer Kunststoff sein. Es werden vorzugsweise Kunststoffe mit hoher Festigkeit, Zähigkeit, Reissfestigkeit, sowie Kälte- und Wärmefestigkeit verwendet.

Als Thermoplaste eignen sich beispielsweise Polyolefine, wie Polyethylen und Polypropylen, Polyester, Polyvinylchlorid (PVC), Polyamide, Polycarbonate (PC), sowie Acrylnitril-Butadien-Styrol-Copolymere (ABS), Styrol-Butadien-Copolymere (SB) oder Polyblends aus ABS und PVC, aus ABS und PC oder aus ABS und Polyurethan oder aus PC und Polybutylenterephthalat (PBT) weiters auch Styrol-Acrylnitril-Copolymere (SAN).

Als Duroplaste werden beispielsweise Epoxidharze, Epoxidharze enthaltend oder daraus bestehend, Phenol-Formaldehydharze, Harnstoff-Formaldehydharze, Melamin-Formaldehydharze, Melamin-Phenol-Formaldehydharze, ungesättigte Polyesterharze, Polyimide oder Polyurethane verwendet.

Als Verstärkungsmaterial werden vorzugsweise Fasern, insbesondere textile Flächengebilde aus Fasern, verwendet. Als Verstärkungsfasern können insbesondere anorganische Fasern, wie Glasfasern, Kohlenstoff- oder Graphitfasern, Metallfasern (Draht), keramische Fasern oder Fasern aus Cellulosederivaten oder aus thermoplastischen Kunststoffen, wie z.B. Polyvinylchloride, Polyacrylonitrile, Polyacryle, Polyolefine, z.B. Polypropylen, Polyester, Polyamide oder Kunststofffasern bekannt unter Kevlar bzw. Aramid, etc., oder Naturfasern, wie faserartige Silikatminerale, Jute, Sisal, Hanf, Baumwolle, Ramiefasern, etc., oder Mischfasern davon verwendet werden.

Besonders bevorzugte Verstärkungsfasern sind Kohlenstofffasern, wie hochfeste HT- oder hochmodule HM-Kohlenstofffasern. Weitere bevorzugte Verstärkungsfasern sind Kunststofffasern, wie Aramidfasern, oder Glasfasern, wie E-Glasfasern, sowie Verstärkungsfasern aus Metall.

Die Fasern werden zweckmässig in Form von textilen Flächengebilden wie Vliese oder Matten sowie als textile Flächengebilde von nichtmaschenbildenden Systemen, wie Gewebe, uni- oder bidirektionale Gelege, Geflechte usw. oder maschenbildenden Systemen, wie Gestricke, Gewirke usw. verwendet. Bevorzugt werden hauptsächlich textile Flächengebilde aus gerichteten Fasern und insbesondere textile Gewebe aus vorzugsweise Langfasern.

Als Verstärkungsmaterial können auch Schichten, Stäbe, Platten oder Folien aus geeigneten Materialien, beispielsweise aus oben genannten Materialien, in den Kunststoff eingelegt sein.

Der Kunststoff kann im weiteren neben Verstärkungsfasern, auch Füllstoffe enthalten, welche beispielsweise grob- oder feinkörnig, plättchenförmig, etc., sein können. Füllstoffe, wie beispielsweise Kalziumkarbonat, Kaolin, Glas, Glimmer, Talk, Silikat, Wollastonit oder Aluminiumoxide, reduzieren den thermischen Ausdehnungskoeffizienten des Kunststoffes. Füllstoffe, wie Aluminiumoxide und Antimonoxid, können verwendet werden, um die Feuerfestigkeit des Kunststoffes zu erhöhen und Füllstoffe, wie Glimmer und Silikate, können eingesetzt werden, um die chemische Widerstandsfähigkeit des Kunststoffes zu erhöhen. Elektrisch leitendes Füllmaterial, wie Metallpulver und Graphit oder Russ, wird verwendet, um statisches Aufladen des Kunststoffes zu vermeiden. Füllstoffe, wie beispielsweise Kalk, Kohlepartikel oder Titandioxid und weitere, können als Pigmente eingesetzt werden.

Der Hohlkörper ist vorzugsweise hohlzylinderförmig und enthält oder besteht aus zweckmässig aus einem Metall, beispielsweise Eisenmetall, wie Eisen, verzinktes Eisen, Stahl, einem Nicht-Eisenmetall, wie Messing, Kupfer, Magnesium und seine Legierungen oder aus Aluminium und seinen Legierungen. Der Hohlkörper besteht vorzugsweise aus Aluminium und seinen Legierungen oder Stahl und seinen Legierungen. Der Hohlkörper kann auch teilweise oder vollständig aus verstärktem bzw. faserverstärktem Kunststoff der oben beschriebenen Art, zweckmässig aus demselben Kunststoff wie das Trägerprofil, bestehen.

Der Hohlkörper ist beispielsweise mit dem Trägerprofil verklebt, verschweisst (Kunststoffschweissen) oder über mechanische Befestigungsmittel verbunden. Vorzugsweise wird eine Kombination von einer stoff- bzw. kraftschlüssigen mit einer formschlüssigen Verbindungstechnik angewendet.

Der Hohlkörper bzw. die Hülse dient beispielsweise zur Aufnahme eines Antriebsaggregates oder einer Antriebswelle zur Kraftübertragung auf das benachbarte Rad.

Die Drehzahlregulierung der Räder, beispielsweise bei Kurvenfahrt, kann elektronisch, elektrisch, hydraulisch oder über ein Differentialgetriebe mechanischem geregelt werden, wobei ein Differential- oder Zwischengetriebe ebenfalls am Radsupport vorzugsweise im Hohlkörper angebracht ist. Das Differentialgehäuse ist in diesem Fall vorzugsweise über elastische Lager geräuschisoliert mit dem Radsupport verbunden.

Beim Antriebsaggregat handelt es sich vorzugsweise um einen Elektromotor, wobei der Hohlkörper in dieser Ausführungsvariante ein Statorgehäuse zur Aufnahme des Rotor enthält. Der Radsupport kann im Einbaubereich der Statorbauteile umfassende oder partielle Schwingungsdämpfer beinhalten.

Der Stator bzw. Hohlkörper weist zweckmässig einen im wesentlichen dreiteiligen Aufbau auf, mit einem inneren Gehäuse dem eigentlichen Statorgehäuse, einem Schwingungsdämpfer, beispielsweise aus einem Elastomer, wie Gummi, und einem äusseren Gehäuse, beispielsweise einem in das Trägerprofil einlaminierten oder eingegossenen Gehäuse mit vorstehenden Rippen, welche einerseits das Gehäuseteil als kraftübertragendes Bauteil im Trägerprofil verankern und andererseits als Kühlrippen dienen. Die Antriebsenergie des Elektromotors wird vorzugsweise über eine Antriebswelle direkt dem Rad bzw. der Radnabe zugeführt oder an ein Zwischengetriebe bzw. Differentialgetriebe weitergegeben, welches beispielsweise ebenfalls im Radsupport integriert ist. Bei direktem Antrieb ohne Zwischen- oder Differentialgetriebe erfolgt die Drehzahlregulierung der einzelnen Räder auf elektronischem bzw. elektrischem Weg.

Der Hohlkörper kann auch eine mechanische, hydraulische oder pneumatische Antriebseinheit aufnehmen.

Zwei in einer Achse, gegenüber liegende Radsupporte können mittels Queraussteifungs-, Diagonal-, oder Torsionselementen gegenseitig zu einem Rahmen verbunden sein und einen Fahrschemel bzw. Achsschemel bilden. Im weiteren können zwei oder mehrere Radsupporte oder Fahrschemel in Fahrzeuglängsrichtung durch Längselemente, insbesondere durch Längsprofile aus faserverstärktem Kunststoff, in Fahrzeuglängsrichtung miteinander verbunden sein.

Radsupporte können sowohl in der Front- als auch in der Heckpartie des Fahrzeuges verwendet werden, wobei sie in der Frontpartie zusätzlich noch Elemente und Bauteile der Radlenkung aufnehmen können. Der Radsupport kann sowohl bei ein- als auch bei mehrachsiger Radführung verwendet werden.

Die Betriebsmittelzufuhr (z.B. Strom, Benzin oder Gas etc.) für den Antrieb erfolgt beispielsweise über Schnellkupplungen am Radsupport. Das heisst, bestehende Anschlussschnittstellen für Zufuhr- und Wegfuhrleitungen am Radsupport erlauben ein schnelles, bequemes An- und Abkuppeln der Leitungen.

Der Radsupport bzw. Fahrschemel bildet zusammen mit seinen Anbauteilen und den daran befestigten Komponenten, wie beispielsweise Antriebsaggregat, Antriebswellen, Zwischengetriebe, Queraussteifungen, etc. eine komplette Montageeinheit, welche mit einfachen Mitteln an die Fahrzeugstruktur angebracht werden kann.

Der Radsupport kann auch bloss als Zwischenbauteil konzipiert sein und beispielsweise lediglich ein Differentialgetriebegehäuse oder einen Antrieb oder eine Antriebswelle aufnehmen.

Der Anbau des Radsupportes an die Fahrzeugstruktur bzw. an die Karosserie erfolgt vorteilhaft über Anbauteile, wie Verbindungsanbauteile, beispielsweise aus Metall, welche durch Kleben, Kunststoffschweissen oder mit mechanischen Befestigungsmitteln, wie Schrauben oder Nieten, am Radsupport angebracht sind. Die Verbindungsanbauteile können auch teilweise oder vollständig im Kunststoff des Trägerprofils des Radsupportes einlaminiert oder eingegossen sein.

Ein aus zwei Radsupporten gefügter Fahrschemel kann, falls er starr mit der Fahrzeugstruktur verbunden ist, beispielsweise über lediglich vier Punkte an diese fixiert werden. Befestigungspunkte können beispielsweise vier Gummilager mit einer genau definierte Elastizität sein, welche für eine Erhöhung des Abrollkomforts sorgen.

Eine andere Befestigungsvariante des Radsupportes bzw. des Fahrschemels an der Fahrzeugstruktur kann so konzipiert sein, dass es möglich ist, ohne grossen technischen und zeitlichen Aufwand den Radsupport bzw. den Fahrschemel zu lösen, in Fahrzeuglängsrichtung in eine andere Position zu verschieben und erneut an der Fahrzeugstruktur zu befestigen und somit auf schnelle und unkomplizierte Weise den Radstand innerhalb vorgesehener Grenzen beliebig zu ändern.

Solche Befestigungsvorrichtungen können beispielsweise in Fahrzeuglängsrichtung an die Oberseite der Trägerprofile befestigte Hohlprofile mit in Gleichrichtung verlaufendem Lochbild sein, durch dessen Lochungen Bolzen, welche an der Fahrzeugstruktur angebracht sind, zur Arretierung des Radsupportes bzw. Fahrschemels in der gewünschten Position eingeführt und mit Querstiften arretiert werden können.

Weiters sind auch die Verwendung von in Fahrzeuglängsrichtung orientierten Zahnstangen am Radsupport möglich, in welche an der Fahrzeugstruktur angebrachte Arretierelemente einrasten. Das Anheben bzw. Absenken der Fahrzeugstruktur oder des Radsupportes zur Lösung der Arretierung erfolgt vorzugsweise mittels einer hydraulisch oder pneumatisch angetriebenen oder mechanisch mittels Spindel oder Übersetzungswinde funktionierenden Anhebevorrichtung.

Diese vorgenannten Ausführungsvarianten ermöglichen es, den Radstand zu ändern, um so die Lastverteilung der Achsen, beispielsweise zur Einhaltung staatlicher Vorschriften und Richtlinien oder um bessere Achslastverteilungen bei hohen oder niedrigen sowie einseitiger Zuladungen, anzupassen. Dadurch kann auch das Fahr-, Brems- und Kurvenverhalten des Fahrzeuges in Abhängigkeit der Zuladung optimiert werden.

Der erfindungsgemässe Radsupport ist beispielsweise für Fahrzeuge, wie Nutzfahrzeuge, mit einem Leergewicht von bis zu 40 t, insbesondere bis zu 16 t ausgelegt.

Die Breite, d.h. die Ausdehnung in Parallelrichtung zur Radachse, eines erfindungsgemässen, aus zwei Radsupporten und Querelementen gefügten Achs- oder Fahrschemels beträgt beispielsweise für einen PKW (Personenkraftwagen) 60 - 150 cm und die Länge, d.h. die Ausdehnung in Fahrzeuglängsrichtung, ist rund 50 - 120 cm, vorzugsweise 80 -100 cm. Die Wanddicke des Trägerprofils beträgt 8 - 30 mm, vorzugsweise 10 - 20 mm. An zusätzlich verstärkten Stellen, beispielsweise an Krafteinleitungsstellen, kann die Wanddicke, beispielsweise durch Anbringen zusätzlicher Verstärkungselemente, 20 - 50 mm betragen.

Die Breite des Trägerprofils, d.h. die Ausdehnung in Parallelrichtung zur Radachse, beträgt beispielsweise bei PKW's 15 - 40 cm, vorzugsweise 20 - 30 cm. Die Massangaben können jedoch je nach Fahrzeugtyp (Grösse, Gewicht, etc. ) noch erheblich abweichen.

Die Breite des Achs- oder Fahrschemels bei LKW's (Lastkraftwagen) kann beispielsweise 80 - 220 cm betragen. Die Länge kann je nach Fahrzeugkategorie 60 - 300 cm betragen. Die mittlere Länge bei Fahrschemeln für LKW's in Einachsausführung der Hinterachse ist vorzugsweise 140 - 160 cm. Die Breite des Trägerprofils eines Radsupportes bzw. eines Fahrschemels für LKW's kann 20 - 80 cm betragen, vorzugsweise 40 - 50 cm.

Sowohl die oben angegebenen Längen als auch Wanddicken und Breiten der Trägerprofile gelten ebenfalls für Radsupporte.

Die Höhe des Trägerprofils bzw. die Höhe der beiden Flanken eines U-förmigen Trägerprofils, d. h. seine vertikale Ausdehnung, nimmt vorzugsweise von den beiden seitlichen Längsenden zum Hohlkörper hin zu. Das Trägerprofil weist in Seitenansicht somit beispielsweise dreieck- oder trapezförmige Konturen auf.

Die Verbindung zwischen dem Radsupport und der Fahrzeugstruktur kann durch Gummi- bzw. Elastomerlager gefedert sein. Möglich ist dabei der Einbau einer federnden Zwischenlage zwischen den Anbau- bzw. Verbindungsanbauteilen oder Verbindungsteilen und dem Trägerprofil, beispielsweise aus Gummi, oder das Einbringen einer federnden Zwischenlage im Verbindungsanbauteil selbst, wobei die federnde Zwischenlage vorzugsweise durch Kleben oder Kunststoffschweissen mit dem Verbindungsteil bzw. Trägerprofil verbunden ist. Die Anordnung und eine genau definierte Elastizität der Federungen bzw. Gummilager lässt ein weitgehendes Entkoppeln zwischen Radsupport und Fahrzeugstruktur zu und führt dabei zu einer Unterdrückung der hör- und spürbaren Schwingungen. Der Radsupport kann beispielsweise auch über Silentblöcke an die Fahrzeugstruktur geschraubt sein.

Zusätzlich zu den oben genannten Federelementen können, insbesondere bei nicht verschiebbaren Radsupporten, zur Unterdrückung der spürbaren und auch der hörbaren Schwingungen weitere Federeinrichtungen wie Stossdämpfer oder Federbeine über entsprechende Anbauteile oder Einbauteile am Radsupport vorgesehen sein. Die Federeinrichtungen werden ebenfalls vorzugsweise mit der Fahrzeugstruktur verbunden. Die Einbauteile sind beispielsweise hohlkörper- oder hülsenförmig und mit dem Trägerprofil verklebt.

Im weiteren können hohlkörper- oder hülsenförmige Einbauteile auch zur Aufnahme von z.B. Querelementen oder Torsionsstäben vorgesehen sein.

Die Anbauteile oder Einbauteile werden beispielsweise thermoplastisch (Kunststoffschweissen), durch Kleben oder mechanisch (Nieten, Schrauben, etc.) am Radsupport fixiert. Als Federungen kommen insbesondere Stahl-, Flüssigkeits-, Luft-, oder Gasfedern sowie Kunststoff-, Blatt- oder Gummifedern, die auf Druck- und Zugkräfte ausgelegt sind, oder Federn aus zelligem Polyurethan-Elastomer, die auf Schubkräfte ausgelegt sind, in Frage. Als zusätzliche Federungen werden bevorzugt Gummilager verwendet.

Im Bereich von hohen Krafteinleitungen kann die Profilkonfiguration des Radsupportes mit einem Schaumstoffkern partiell oder vollständig hinterfüllt bzw. ausgefüllt sein. In diesem Bereich werden vorzugsweise partiell oder vollständig geschlossene Trägerprofile, wie z.B. U-Profile oder Hohlprofile, verwendet. Als Schaumstoffe werden beispielsweise Ein- oder Zweikomponentenschäume in der Ausführung von Klebe- oder Montageschäume, vorzugsweise auf der Basis von Polyurethan oder auch Polyisocyanurat und Harnstoff-Formaldehyd verwendet. Der Schaumstoff kann beispielsweise nach dem Fügen des Trägerprofiles in den Hohlraum eingeschäumt und ausgehärtet werden oder er kann vorgefertigt und in Mass geschnitten beim Fügen des Trägerprofiles im Hohlraum plaziert und verklebt werden.

Im weiteren kann der Radsupport durch das Anbringen von Anbauteilen, beispielsweise mittels Kleben oder Kunststoffschweissen, örtlich verstärkt werden.

Um die ungefederte Masse gering zu halten, sind die Radlager jeweils vorzugsweise über einen oder mehrere vorzugsweise angebrachte Lenker mit dem Radsupport verbunden. Die Radlager können sich zusätzlich, beispielsweise über Federbeine, an der Fahrzeugstruktur abstützen. Die Lenker übernehmen die Radführung und können beispielsweise über gefederte oder ungefederte Kugelgelenke oder über Gummilager mit dem Radsupport verbunden sein. Sie stützen die Seiten- und gegebenenfalls auch Längskräfte direkt am Radsupport ab und sorgen für die Querstabilität des Fahrzeuges, wobei in diesem Fall die Radsupporte einer Achseinheit vorteilhaft durch Querprofile zu einem Fahrschemel verbunden sind. Die Querprofile des Fahrschemels können auch die Aufgabe eines Querstabilisators übernehmen.

Die eigentlichen Radkräfte, d.h. die Hochkräfte, können beispielsweise von einem Federbein, vorzugsweise einem radführenden Federbein aufgenommen werden, welches beispielsweise mit der Fahrzeugstruktur verbunden ist und sich auf einen Radträger abstützt.

Bei Strassen- und insbesondere bei Schienenfahrzeugen kann vorgesehen sein, dass das Rad, insbesondere das angetriebene Rad, derart mit dem Radsupport verbunden ist, dass es sich in Radachsrichtung verschieben kann und sich dadurch der Strassenbeschaffenheit anpassen oder sich nach dem Schienenstrang ausrichten kann.

Am Radsupport können auch Querstreben (Diagonal- oder Queraussteifungselemente) oder Torsionsstäbe vorgesehen sein, die mit ihrem anderen freien Ende beispielsweise an der Fahrzeugstruktur befestigt sind oder mit einem gegenüberliegenden Radsupport verbunden sind und Seiten- sowie auf den Rahmen einwirkende Torsionskräfte aufnehmen können.

Die Torsionsstäbe oder Querstreben können über Einlagebüchsen, insbesondere Einlagebüchsen mit gezahnter Aussenfläche, welche beispielsweise verzahnend im Kunststoff des Trägerprofils eingelassen sind, beispielsweise durch Eingiessen oder Einlaminieren, am Radsupport befestigt sein. Die Verzahnung verhindert ein Abscheren der Verbindungsflächen zwischen der Einlagebüchse und dem Trägerprofil bei Einwirkung von Torsionskräften. Die Einlagebüchse kann auch an ihrer Innenseite eine Zahnung aufweisen, welche das Durchdrehen des Torsionstabes in der Einlagebüchse verhindert.

Weiters können Anbauteile aus Metall, Kunststoff, Verbundstoffen oder anderen Materialien zur Erfüllung weiterer Funktionen z.B. zur Aufnahme von Schnellkupplungen, d.h. Anschlussschnittstellen, etc. durch einlaminieren, eingiessen, Kleben, Kunststoffschweissen oder durch mechanische Befestigungstechniken an den Radsupport angebracht werden. Anbauteile, welche einer erhöhten Wärmebelastung ausgesetzt sind können beispielsweise auch aus keramischen Materialien bestehen.

Als Kleber kommen vorzugsweise Kleber auf der Basis von beispielsweise Phenolharzen, Epoxidharzen, Cyanacrylatkleber, Acrylatkleber sowie Polyurethankleber oder Modifikation der vorgenannten Klebstoffe zur Anwendung.

Erfindungsgemässe Radsupporte sind herstellbar dadurch, dass das Trägerprofil aus zwei Halbprofilen zusammengesetzt wird, die mittels Kleben oder Kunststoffschweissen zu einem U-förmigen Profil oder Hohlprofil gefügt werden, und eine Hülse oder ein Hohlkörper zur Aufnahme eines Antriebes oder einer Antriebswelle oder als Teil einer Antriebseinheit selbst teilweise oder vollständig in das Trägerprofil eingelassen und durch Kleben oder Kunststoffschweissen mit dem Trägerprofil verbunden wird, wobei beim Fügen des Trägerprofils dessen Hohlraum zur Verstärkung partiell oder vollständig mit Kunststoff, insbesondere mit einem Schaumstoff, ausgefüllt wird.

Die wesentlichen Vorteile des erfindungsgemässen Radsupportes liegen darin, dass dieser direkt mit der Fahrzeugstruktur verbunden wird und auf einen zusätzlichen Rahmenträger verzichtet werden kann. Der Radsupport bzw. Fahrschemel kann die gesamte Antriebseinheit aufnehmen und als Moduleinheit in physikalischer Trennung vom restlichen Fahrzeug hergestellt und in der Phase der Endmontage direkt an der Fahrzeugstruktur angebracht werden. Die Vorteile der verstärkten Kunststoffe wie geringes Gewicht, hohe Festigkeit und Zähigkeit, sowie ausbleibende Korrosion können beim erfindungsgemässen Radsupport vollumfänglich ausgenutzt werden. Das Ausschäumen von Trägerprofilabschnitten erlaubt auf einfache Weise, das lokale Verstärken der Radsupportstruktur. Weiters können mit relativ wenig Aufwand beispielsweise durch Kleben oder Kunststoffschweissen beliebig Anbauteile angebracht werden. Die beschriebene Integration von metallischen Bauteilen wie Statorgehäuse, Supporte für Torsions-, Diagonal- oder Queraussteifungselementen ermöglicht eine optimale Anbindung der Kunststoffbauteile in eine im wesentlichen metallische Fahrzeugstruktur.

Im folgenden wird die Erfindung beispielhaft und mit Bezug auf die beiliegenden Zeichnungen näher erläutert. Es zeigen:
- Fig. 1:: eine schematische, perspektivische Ansicht eines Radsupportes am Fahrzeug;
- Fig. 2:: eine schematische, perspektivische Ansicht eines aus zwei Radsupporten gefügten Fahrschemels am Fahrzeug;
- Fig. 3a:: eine Aufsicht eines Radsupportes mit Torsionsstab;
- Fig. 3b:: eine Seitenansicht aus Richtung Z gemäss Fig. 3a;
- Fig. 3c:: einen Querschnitt entlang B - B gemäss Fig. 3a;
- Fig. 4a:: einen Querschnitt durch einen Radsupport;
- Fig. 4b:: eine Seitenansicht aus Richtung Y gemäss Fig. 4a;
- Fig. 5a - c:: einen Querschnitt durch ein Trägerprofil eines Radsupportes mit Anbauteil;
- Fig. 6:: einen Querschnitt durch ein verstärktes Trägerprofil eines Radsupportes mit Anbauteil;
- Fig. 7a - b:: eine perspektivische Ansicht eines Radsupportes als Flanschvariante;
- Fig. 8:: einen Querschnitt durch einen zerlegten Radsupport;
- Fig. 9a:: eine Aufsicht zweier durch Querelemente zu einem Fahrschemel verbundenen Radsupporte;
- Fig. 9b:: eine Seitenansicht aus Richtung X gemäss Fig. 9a;
- Fig. 9c:: einen Querschnitt entlang A - A gemäss Fig. 9a;
- Fig. 10a-c:: einen Querschnitt entlang C - C durch die Zahnstange mit Arretierelementen und die Verschiebung eines Fahrschemels gemäss Fig. 2.

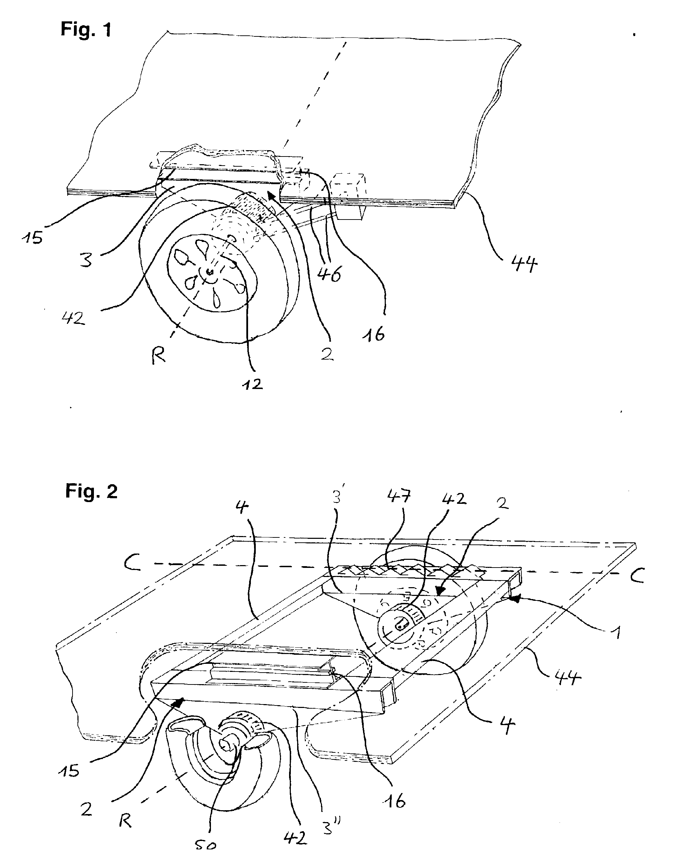

Fig. 1 zeigt einen Radsupport 2, enthaltend ein Trägerprofil 3, in welches ein Hohlkörper 42 eingelassen ist, der das Statorgehäuse eines Elektromotors enthält und den Rotor eines solchen aufnimmt, wobei die Mittelängsachse des Hohlkörpers 42 in der Radachse R liegt. Das Trägerprofil 3 ist über ein mit Gummilager 16 gefedertes Anbauteil 15 aus Aluminium mit der Fahrzeugbodenstruktur 44 mittels Klebverbindung verbunden. Eine Antriebswelle 12 überträgt das im Elektromotor erzeugte Drehmoment direkt auf das Rad. Sowohl der Radsupport 2 als auch das Rad sind zusätzlich über Längsstreben 46 mit der Fahrzeugstruktur verbunden.

Fig. 2 zeigt einen Fahrschemel 1, der aus zwei über ein vorderes und hinteres Querprofil 4 miteinander verbundenen Radsupporte 2 besteht. In den beiden seitlichen Trägerprofilen 3', 3" ist je ein Hohlkörper 42 eingelassen, welcher eine Antriebseinheit aufnimmt, wobei die Mittelängsachse des Hohlkörpers 42 in der Radachse R liegt. Die Räder werden beidseitig durch separate Elektromotoren angetrieben, welche das erzeugte Drehmoment über eine Antriebswelle auf das Rad übertragen. Das Rad ist mit dem Fahrschemel 1 über ein, die Antriebswelle aufnehmenden Achsstummel 50 verbunden. Der Fahrschemel 1 ist an einem der Trägerprofile 3" über ein mit Gummilager 16 gefedertes Anbauteil 15 aus Metall mit der Fahrzeugbodenstruktur 44 verbunden. Das andere Trägerprofil 3' ist über eine Zahnstange 47, in welche an der Fahrzeugbodenstruktur 44 angebrachte Arretierelemente greifen, mit der Fahrzeugstruktur verbunden. Die Trägerprofile 3', 3" können gleich oder unterschiedlich ausgebildet sein. Insbesondere beim Anbau von unterschiedlichen Funktionsteilen können die jeweiligen Trägerprofile 3', 3" entsprechend individuell ausgebildet sein. Die Querprofile 4 können gegebenenfalls durch weitere Querelemente zusätzlich verstärkt sein.

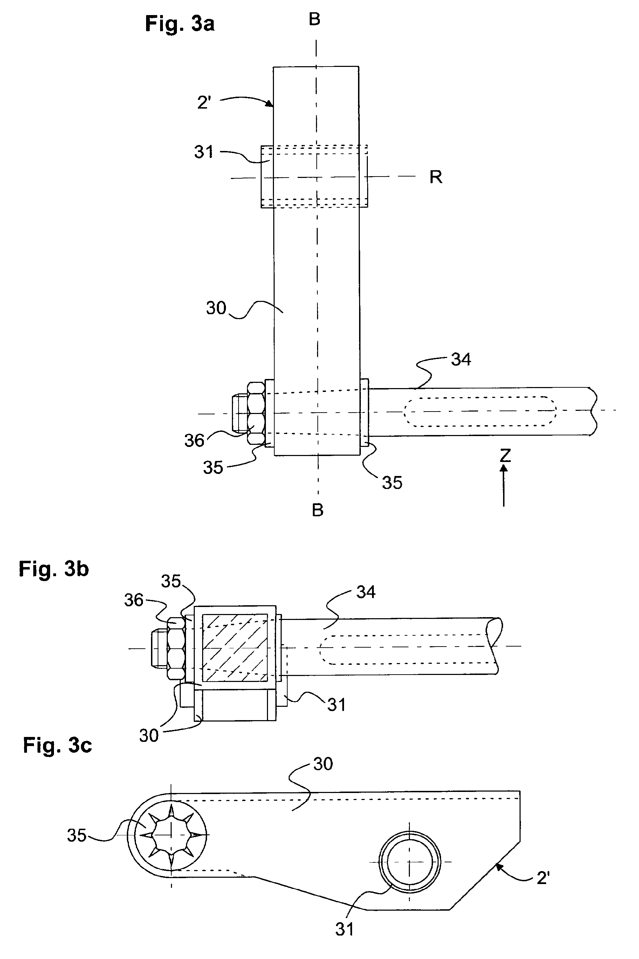

Fig. 3a zeigt einen Radsupport 2' mit einer in den Kunststoff des Trägerprofils 30 eingebauten Hülse 31 zur Aufnahme von Antrieb oder Antriebswellen. An dem weiter von der Hülse 31 entfernten freien Längsende des Trägerprofils 30 ist ein Torsionsstab 34 angebracht. Dazu ist in den Kunststoff des Trägerprofils 30 eine innenseitig gezahnte, und innenseitig konisch geformte Einlagebüchse 35 einlaminiert. Der Torsionsstab 34 greift mit seinem ebenfalls konischen Stabenden in die Einlagebüchsen 35 und verzahnt sich darin drehfest, wobei der jeweils auf der anderen Seite der Einlagebüchse 35 wieder austretende Stabendabschnitt ein Gewinde aufweist und mit einer Mutter 36 festgeschraubt ist (siehe auch Fig. 3b). Das andere Ende des Torsionsstabes kann beispielsweise an der Fahrzeugstruktur oder an einem gegenüber liegenden Radsupport angebracht sein.

Das Trägerprofil ist im Bereich der Einlagebüchse 35 als Einfachhohlprofil mit Schaumstoffkern ausgebildet, welcher in Fig. 3b schraffiert dargestellt ist.

Fig. 3c zeigt den Radsupport 2' in Querschnittsansicht entlang B - B gemäss Fig. 3a mit der im Trägerprofil 30 eingelassenen und innenseitig gezahnten Einlagebüchse 35 und der Hülse 31. Die Einlagebüchse 35 kann wahlweise auch aussenseitig verzahnt sein, so dass sie sich besser im Kunststoff verankert (nicht gezeigt).

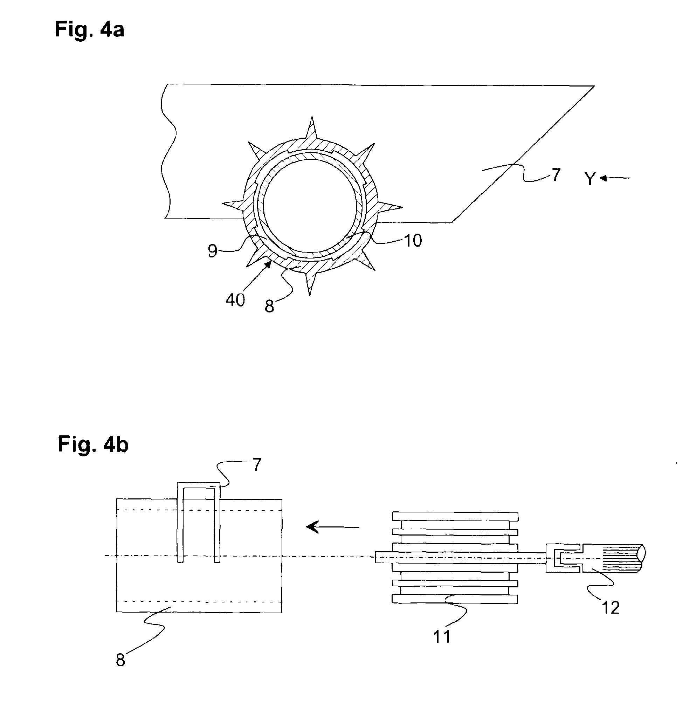

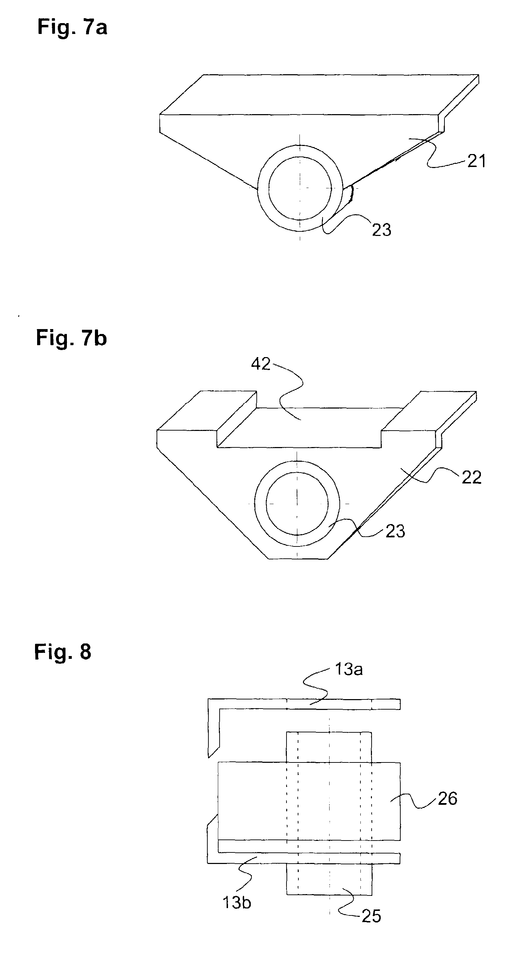

Fig. 4a zeigt einen Ausschnitt eines Radsupportes, welcher zur Ausstattung mit einem Elektromotorantrieb vorgesehen ist. Ein Statorgehäuse 10 aus Metall, ein dazwischen liegender Schwingungsdämpfer 9 aus Kunststoff und ein gezahnter Aussenring 8 aus Metall bilden den sogenannten Hohlkörper 40 zur Aufnahme des Rotors 11 (Fig. 4b). Der Hohlkörper 40 ist analog zu Fig. 3a bis 3c mit dem Trägerprofil 7 über eine Klebverbindung verbunden, wobei ebenfalls ein Schaumstoffkörper 26 (siehe auch Fig. 8) zur Erhöhung der Festigkeit in das U-förmige Trägerprofil 7 gefügt ist.

Am Elektromotor bzw. am Rotor 11 schliesst eine Antriebswelle 12 an, welche den Antrieb auf das Rad überträgt (Fig. 4b).

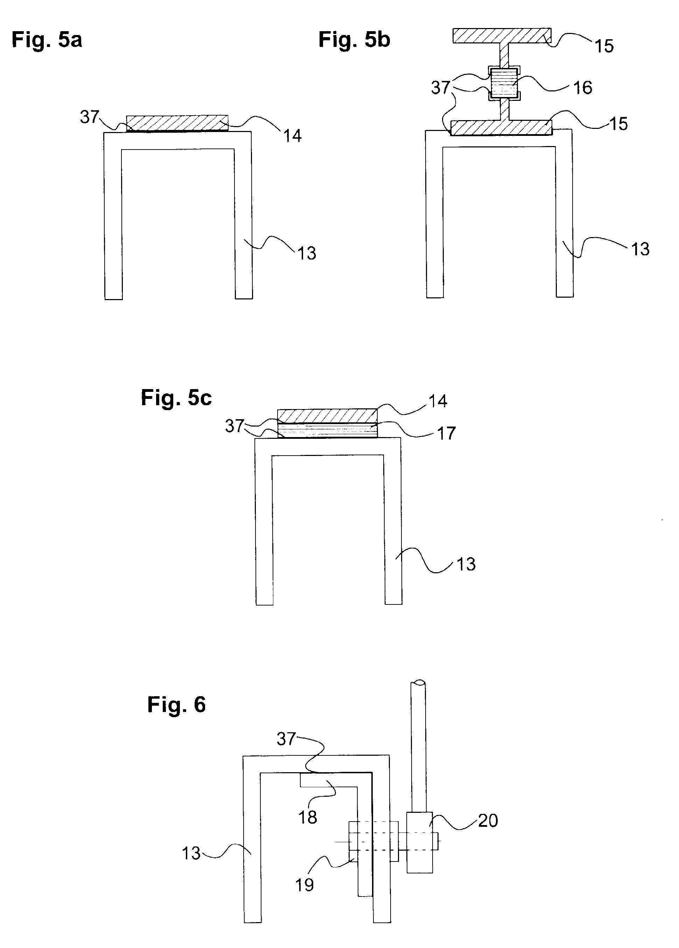

Fig. 5a bis 5c zeigen verschiedene Varianten der Befestigung von Anbauteilen 14, 15 aus Metall. Die Anbauteile 14, 15 werden in der Regel mittels Klebverbindungen 37 an das Trägerprofil 13 angebracht. Die Anbauteile 14, 15 können auch teilweise oder vollständig in das Trägerprofil 13 einlaminiert sein (Fig. 5b). Dienen die Anbauteile 14, 15 als Verbindungsschnittstelle zur Fahrzeugstruktur, so wird entweder direkt am Trägerprofil 13 (Fig. 5c) oder zwischen den Anbauteilen 15 (Fig. 5b) eine federnde Zwischenlage 16, 17, insbesondere ein Gummilager, mittels Klebverbindung 37 eingebaut.

Fig. 6 zeigt ein lokal verstärktes Trägerprofil 13 mit einem Federbein 20 als Anbauteil. An der Innenseite des Trägerprofils 13 ist ein Winkelelement 18 zur Verstärkung mittels Klebverbindung 37 angebracht. Durch das Trägerprofil 13 und das Winkelelement 18 ist ein Einbauteil 19 aus Metall oder einem Sinterwerkstoff in der Form einer Hülse zur Aufnahme eines Verbindungsteiles für ein seitliches Dämpferbein 20 mittels Klebverbindung 37 gefügt.

Fig. 7a bis 7b zeigen Flanschvarianten des erfindungsgemässen Radsupportes. Das Trägerprofil 21, 22 ist in diesen Beispielen als Winkelelement ausgebildet, durch welches eine kurze Hülse 23 aus Metall zur Aufnahme der Antriebswelle oder des Antriebes führt. Die Hülse 23 ist mittels Klebverbindung mit dem Kunststoff des Trägerprofils 21, 22 verbunden. Eine besondere Flanschvariante (Fig. 7b) enthält im weiteren eine mittige Vertiefung 42 zur Aufnahme eines Querprofiles.

Fig. 8 zeigt den Fügeprozess eines Radsupportes. Zwei längliche Winkelstücke 13a, 13b werden mittels Klebverbindung zu einem U-förmigen Trägerprofil 13 gefügt (siehe auch Fig. 5a), wobei gegebenenfalls dazwischen ein Schaumstoffkern 26 eingeschlossen und mittels Kleben gefügt wird. Die Hülse 25 aus Metall wird ebenfalls im selben Fertigungsprozess teilweise (Fig. 7a) oder vollständig (Fig. 7b) in das Trägerprofil 13 eingelassen und mit diesem und gegebenenfalls mit dem hinterlegten Schaumstoffkern 26 verklebt.

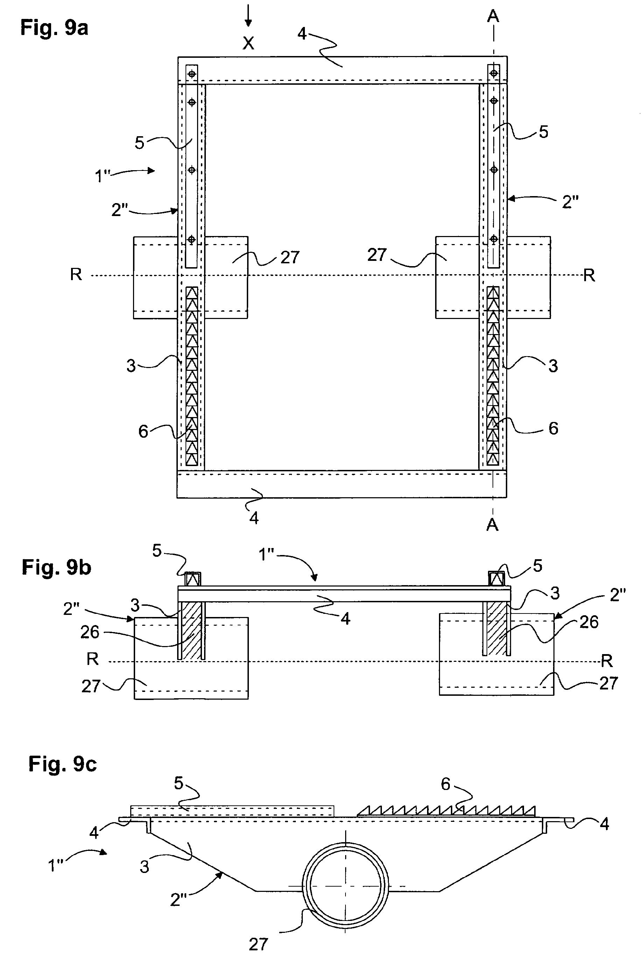

Fig. 9a bis 9c zeigen zwei über Querprofile 4 zu einem Fahrschemel 1" verbundene Radsupporte 2". Ein Radsupport 2" besteht jeweils im wesentlichen aus einem zylinderförmigen Hohlkörper 27 aus Metall und einem auf diesem angebrachten im wesentlichen U-förmigen Trägerprofil 3 aus faserverstärktem Kunststoff. Die beiden Teile sind mittels Klebverbindung miteinander verbunden. Der offene Hohlraum des Trägerprofils 3 ist im Bereich der Verbindungsflächen zwischen Trägerprofil 3 und Hohlkörper 27 mit einen Schaumkörper 26 ausgefüllt (siehe auch Fig. 8), welcher mit den anstehenden Flächen verklebt ist. Dadurch wird die mechanische Festigkeit des Trägerprofils 3 erhöht.

Der Fahrschemel 1" ist mit Befestigungselementen versehen, die unter anderem aus einem an der Oberseite längs des Trägerprofils 3 angebrachten Einfachhohlprofil 5 mit Lochbild oder als Variante aus einer Zahnstange 6 bestehen. Der Einfachheit halber werden in Fig. 9a beide Befestigungsvarianten am selben Fahrschemel gezeigt, was eine weitere Ausführungsvariante ist.

Bei all diesen Varianten kann eine starre jedoch lösbare Verbindung mit der Fahrzeugstruktur hergestellt werden. Beim Befestigen des Fahrschemels werden vertikal an der Fahrzeugstruktur angebrachte Bolzen in Lochöffnungen am Hohlprofil 5 eingeführt und beispielsweise mit Querstiften arretiert. Die längsseitig auf dem Hohlprofil 5 angebrachten Lochöffnungen erlaubt beispielsweise ein in Längsrichtung X wählbares Positionieren und Befestigen des Fahrschemels 1" an der Fahrzeugstruktur.

Falls eine Zahnstange 6 vorgesehen ist, erfolgt die Fixierung durch ein oder mehrere zusätzlich an der Fahrzeugbodenstruktur angebrachten Arretierelemente, welche sich im Arretierzustand in der Zahnstange verzahnen. Die längsseitig verlaufende Zahnung der Zahnstange erlauben ein in Längsrichtung X wählbares Positionieren und Fixieren des Fahrschemels 1" an der Fahrzeugstruktur. Im weiteren sind in diesem Fall zusätzliche Befestigungselemente vorgesehen, die den Radsupport bzw. Fahrschemel zusätzlich und insbesondere in vertikale Richtung fixieren.

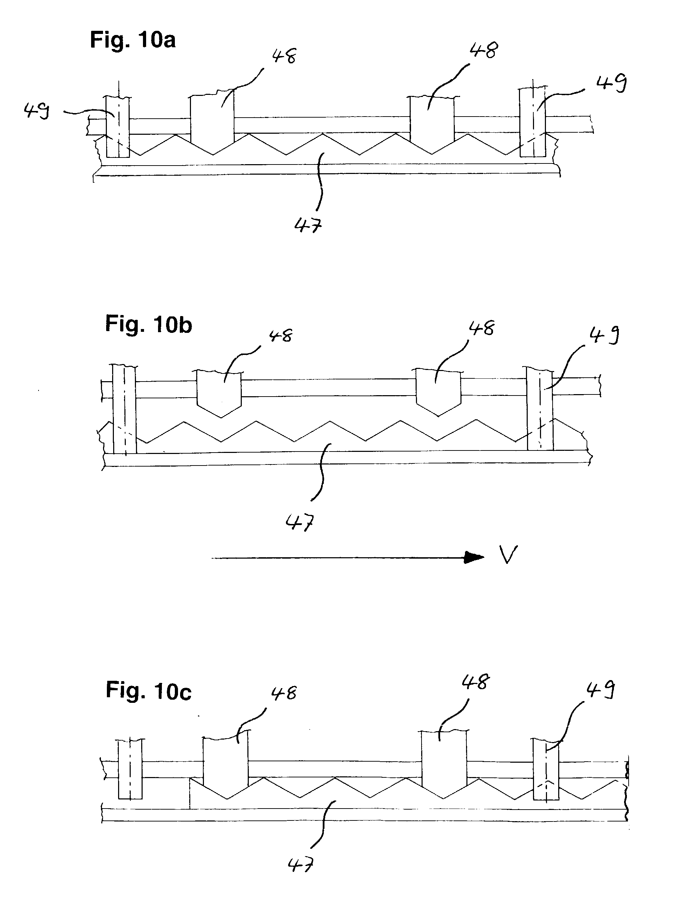

Die Verschiebung des Fahrschemels geschieht mittels eines hydraulisch, pneumatisch oder mechanisch angetriebenen Anhebemechanismus 49 (Fig. 10a). Der Anhebemechanismus 49 hebt die Arretierelemente 48 aus der Verzahnung der Zahnstange 47. In dieser Position kann der Fahrschemel in Längsrichtung V verschoben werden, wobei beispielsweise die Gleitbewegung auf einer entsprechenden Lagerung ausgeführt wird (Fig. 10b). Bei Erreichen der gewünschten Position werden durch das Einfahren der Anhebevorrichtung 49 das oder die Arretierelemente 48 abgesenkt, wobei diese in der Zahnstange 47 einrasten und sich verankern (Fig. 10c). Der Anhebemechanismus 49 kann Bestandteil des Fahrzeuges oder eine separate Vorrichtung sein.

## Patentansprüche

1. Radsupport zur Aufnahme von Radantriebstrukturen, für Strassen- und Schienenfahrzeuge,
dadurch gekennzeichnet, dass
der Radsupport (2) ein quer zur Radachse R verlaufendes Trägerprofil (3), teilweise oder vollständig aus Kunststoff, mit einem am Trägerprofil (3) angebrachten oder in dieses eingelassenen Hohlkörper oder Hülse (42) enthält, und der Radsupport (2) Radantriebsstrukturen aufnimmt, und die den Radsupport (2) und Radantriebsstrukturen enthaltende Baugruppe eine separate Moduleinheit ist, welche über Anbauteile (15) an der Fahrzeugstruktur befestigt ist.

2. Radsupport nach Anspruch 1, dadurch gekennzeichnet, dass das Trägerprofil (3) aus verstärktem Kunststoff, vorzugsweise aus faserverstärktem Kunststoff ist und der Hohlkörper oder Hülse (42) gleich oder parallel zur Radachse R verläuft und aus Metall, insbesondere Aluminium und seine Legierungen oder Stahl und seine Legierungen, oder aus Kunststoff ist.

3. Radsupport nach Anspruch 1, dadurch gekennzeichnet, dass zwei in der Radachse R gegenüberliegende Radsupporte (2) durch ein oder mehrere Querelemente (4), vorzugsweise Querprofile aus faserverstärktem Kunststoff, verbunden sind und einen Achs- oder Fahrschemel (1) ausbilden und/oder zwei oder mehrere Radsupporte oder Fahrschemel durch Längselemente, insbesondere durch Längsprofile aus faserverstärktem Kunststoff, in Fahrzeuglängsrichtung miteinander verbunden sind.

4. Radsupport nach Anspruch 1, dadurch gekennzeichnet, dass das Trägerprofil (13) teilweise oder vollständig eine offene Profil struktur aufweist, vorzugsweise eine U-förmige Profilstruktur, und Anbauteile (14, 15), vorzugsweise aus Metall, in das Trägerprofil (13) einlaminiert, aufgeklebt oder eingegossen sind.

5. Radsupport nach Anspruch 1, dadurch gekennzeichnet, dass der Hohlkörper (40) des Radsupportes einen Elektromotor aufnimmt, wobei der Hohlkörper (40) ein Statorgehäuse (10) enthält, oder der Hohlkörper (40) eine mechanische, hydraulische oder pneumatische Antriebseinheit aufnimmt.

6. Radsupport nach Anspruch 5, dadurch gekennzeichnet, dass das Statorgehäuse (10) über umfassende oder partielle Schwingungsdämpfer (9) in ein äusseres, aussenseitig gezahntes Gehäuse (8) eingebaut ist, wobei das Gehäuse (8) verzahnend in das Trägerprofil (7) des Radsupportes verankert ist.

7. Radsupport nach Anspruch 1, dadurch gekennzeichnet, dass mindestens ein teilweise oder vollständig aus Metall bestehendes Anbauteil (15) auf ein Trägerprofil (13) aufgeklebt oder in den Kunststoff des Trägerprofils (13) einlaminiert oder eingegossen ist und der Radsupport über das Anbauteil (15) mit der Fahrzeugstruktur verbunden ist.

8. Radsupport nach Anspruch 7, dadurch gekennzeichnet, dass Mittel zur Federung und/oder Schalldämpfung zwischen Radsupport und Fahrzeugstruktur vorgesehen sind, und dass vorzugsweise zwischen dem Trägerprofil (13) und dem Anbauteil (14) oder zwischen dem Anbauteil (15) selbst mindestens eine federnde und/oder schalldämmende Zwischenlage (17, 16) eingebaut ist.

9. Radsupport nach Anspruch 1, dadurch gekennzeichnet, dass Einbauteile (19), vorzugsweise aus Metall, insbesondere hohlkörper- oder hülsenförmige Einbauteile (19), durch Kleben oder mechanisch durch Nieten und/oder Schrauben zur Aufnahme von Querverbindungen, Federelementen (20), vorzugsweise Stossdämpfer oder Torsionsstäbe, in das Trägerprofil (13) eingelassen sind.

10. Radsupport nach Anspruch 1, dadurch gekennzeichnet, dass das Trägerprofil (13) in Bereichen erhöhter Krafteinleitung teilweise oder vollständig mit einem Kern aus Schaumstoff (26) ausgefüllt ist und das Trägerprofil (13) in diesen Bereichen vorzugsweise eine geschlossene Hohlprofilstruktur aufweist.

11. Radsupport nach Anspruch 3, dadurch gekennzeichnet, dass der Fahrschemel (1) mit der Fahrzeugstruktur über eine lösbare Verbindung (47) in Fahrzeuglängsrichtung verschiebbar verbunden ist.

12. Verfahren zur Herstellung von Radsupporten nach Anspruch 1,
dadurch gekennzeichnet, dass
das Trägerprofil (13) aus zwei Halbprofilen (13a, 13b) zusammengesetzt wird, die mittels Kleben oder Kunststoffschweissen zu einem U-förmigen Profil oder Hohlprofil gefügt werden, und eine Hülse oder ein Hohlkörper (25) zur Aufnahme eines Antriebes oder einer Antriebswelle oder als Teil einer Antriebseinheit selbst teilweise oder vollständig in das Trägerprofil (13) eingelassen und durch Kleben oder Kunststoffschweissen mit dem Trägerprofil (13) verbunden wird, wobei beim Fügen des Trägerprofils (13) dessen Hohlraum zur Verstärkung partiell oder vollständig mit Kunststoff (26), insbesondere mit einem Schaumstoff, ausgefüllt wird.
